# EUROPEAN PATENT APPLICATION

(11) **EP 1 088 859 A1**
(43) Date of publication of application: **04.04.2001**
(21) Application number: 00120994.9
(22) Date of filing: 27.09.2000
(51) Int. Cl.: C09C 3/04, D21H 17/67

(54) **Process for producing inorganic flours from natural waste products and their use**

(30) Priority: 28.09.1999 IT VA990026
(71) Applicant: Geopolimeri S.r.l., 36028 Rossano Veneto, VI (IT)
(72) Inventor: Nicolucci, Clemente, 36028 Rossano Veneto VI (IT); Bertolini, Francesco, 36028 Rossano Veneto VI (IT)

(57) **Abstract**

A process is disclosed for the production of quality paper and board using as additives inorganic flours obtained by grinding and sifting natural products, particularly ashes of volcanic eruptions or from residuals of transforming shells, mother-of-pearl and corals.

## Description

The present invention refers to the production of quality papers and boards using as additives inorganic flours obtained by treating natural inorganic waste products

In particular, the products used come from cataclysms, such as, for example, the ashes of volcanic eruptions, or from the residuals of transforming shells, mother-of-pearl and coral into food and products.

These inorganic surpluses are used here in place of natural inorganic fillers extracted from quarries or mines.

Using the ashes coming from volcanic eruptions, such as the eruption of the volcano Pinatubo in 1990 which devastated the area of Luzon, for producing useful and high quality consumable products is an important way to return the vegetative capacity back to the lands made sterile by the mass of ash deposited there.

Use of seashells and sea coral recovered from the residuals of industrial working and food processing, to produce flours intended for producing special papers, is one way of transforming surplus and residuals into raw materials useful for producing paper and inorganic fillers.

The flour is obtained by grinding and micronizing, using mills of various types and provenance.

Particularly useful for the purpose are the grinding mills of mineral extraction such as those used to produce fillers for paper or flours of calcium carbonate, kaolin and talc.

Even the mills used to transform corn, rice and wheat into flour are suitable for producing inorganic flours that are highly suitable for producing paper and board and as inorganic fillers for plastics, rubbers, panels, water paints and varnishes.

The inorganic flours which, in the context of the present description are identified with the definitions Volcano Flour, Mother-of-Pearl Flour, Shell Flour and Coral Flour to highlight their provenance, are obtained by grinding and subsequent sifting of these residuals.

In particular, the definition Volcano Flour is intended to identify the volcanic ash that is ground and sifted. Also the melted volcanic mass can be converted into a different volcanic flour but in order to be ground and sifted (at an equal product weight) a greater use of energy, i.e. higher industrial cost, is required. The definition Mother-of-Pearl Flour is understood to mean the residuals of Mother-of-Pearl working.

The definition Shell Flour is understood to mean the residuals of shells and bivalves.

The definition Coral Flour is understood to mean sea coral. The iridescence and colour of the flours and papers consequently obtained varies from shell to shell and from species to species. The same principle applies to the coral residuals.

The present invention particularly concerns the realization of a technology enabling these cumbersome products to be converted into useful raw materials for replacing material extracted from quarries.

Therefore, the purpose of the present invention is the process for producing inorganic flours from the surplus of products of a natural origin and their use in the industrial and artisan production papers and boards.

According to a fundamental aspect of the invention, the natural waste products used are ground to reduce their particles size to a value of from 2 to 2000 microns which can subsequently be sifted with screens of from 50 to 1000 microns to remove the largest fragments.

Normally, the flours according to the invention have an average grain size of from 2 to 1000 microns, and preferably from 2 to 50 microns.

For the inorganic flours coming from volcanic ash and lava, a grinding treatment proved to be particularly opportune to reduce the sizes to values of from 2 to 500 microns, followed by a sifting with screens having an interspace between wire and wire of 50 to 300 microns in order to remove the largest fragments. Excellent quality inorganic flours are obtained from mother-of-pearl, seashells and sea corals, by means of grinding to reduce it to a size of from 5 to 2000 microns and therefore sifting with a screen having a space between wire and wire of from 100 to 1000 microns to remove the largest fragments.

The flours obtained according to the present invention offer papers and boards containing originality, and economical, environmental advantages.

The process according to the invention guarantees the economy of recovering said surplus, while producing for the market quality flours at a competitive cost compared to traditional inorganic fillers.

The flours normally worked and produced at the dry state can also be dispersed in water, resulting in slurries having a dry-content normally of from 15% to 60%.

The quantity of flours, according to the present invention, that can be added to the cellulose (pulp) for obtaining papers and boards of high quality and attractive and characteristic aspect is from 1% to 50% in weight with respect to the cellulose used, preferably from 5% to 35% in weight.

A particularly interesting characteristic of the flours according to the present invention is constituted by the fact that they have an opacifying power on the paper and the boards in which they are used which is much higher than that of the calcium carbonate normally used.

The flours obtained from mother-of-pearl and shells have the particular characteristic of giving the papers and boards an original and attractive visual aspect, even when used in small quantities, i.e. in percentages of from 0.5% to 5% in weight on the paper or board.

A particularly important characteristic of the inorganic flours, according to the present invention, is constituted by the low presence of salts in solution form in the process waters, provided the paper and board production process is carried out at neutral pH.

The system for producing papers with acid pH is not recommended for flours containing considerable quantities of calcium carbonate.

In systems with pH neutral, the sizing agent that gave best results in papers containing the flours according to the present invention, was methylethylketene dimer.

To highlight the characteristics of the paper containing the additives according to the present invention, various tests were carried out using as a comparison a paper obtained in the same way but containing calcium carbonate as an additive instead of the products according to the invention.

The following examples illustrate the various operative conditions enabling good quality flours and papers to be obtained.

### Reference example

### Production of paper containing 20% of calcium carbonate in powder form.

100 kg of calcium carbonate in powder form of the type normally used for producing paper and board, with an average particle diameter of about 10 microns, were added to a water dispersion made up of 100 kg of bleached cellulose obtained from spruce and 300 kg of bleached cellulose obtained from eucalyptus.

A water dispersion of diketenic synthetic sizing agent was added to this pulp to make the paper suitable for writing with water inks and cationic starch to improve the retention of the carbonate in the web context.

The web production was 45 mt.p.m.

The paper obtained (380 kg net of rejects and starting) had a substance of 80 grams per square metre, and was very writable and printable. Tables 1 and 2 summarize the characteristics.

### Example 1

### Production of paper containing 20% of Volcano Flour.

100 kg of flour was obtained by grinding the volcanic ash of Pinatubo with a hammer mill and sifting on a screen (80 microns interspace between wire and wire). This Volcano Flour was made up of particles having an average diameter of about 4 microns. The flour was added to a water dispersion of cellulose fibres and then added with the same ancillaries used for the reference.

This Volcano Flour was used in paper as done with the calcium carbonate normally used in the paper mill.

The composition of the pulp is given in Table 1.

The characteristics of the paper produced are given in Table 2.

The operative conditions of the paper machine remained those used for producing the paper in the reference example.

The grey shade of this flour gives the paper an attractive 'old' look together with high opacity and a pleasant feel due to the increased thickness of the sheet of paper.

At the same weight per unit of area a paper containing 20% of Volcano Flour, in order to have the same thickness, opacity and usability of writing paper and printing paper, saves 8% in weight compared to a paper obtained with 20% calcium carbonate.

### Example 2

### Production of paper containing 20% of Mother-of-Pearl Flour.

100 kg of flour obtained by grinding the residuals of working mother-of-pearl with a hammer mill and sifting on the screen (80 microns interspace between wire and wire) were added to the paper pulp as described in the previous examples.

This Mother-of-Pearl Flour was made up of particles having an average diameter of about 8 microns. This Mother-of-Pearl Flour was used in paper as done with the calcium carbonate normally used in the paper mill, i.e. added to the paper pulp and added with the same ancillaries as per the previous examples.

The operative conditions of the paper machine remained those used for producing the paper in the reference example.

This paper was characterized by diffused iridescence and a slightly pearly colour.

### Example 3

### Production of paper containing 20% of Shell Flour.

100 kg of flour obtained by grinding shells with a hammer mill and sifting on the screen (80 microns interspace between wire and wire) were added to the paper pulp as described in the previous examples.

The Shell Flour had an average diameter of about 7 microns.

The flour was added to a water dispersion of cellulose fibres and then added with the same ancillaries as per the previous examples.

The operative conditions of the paper machine remained those used for producing the paper in the reference example.

This paper was characterized by light iridescence and a slightly metallic colour.

### Example 4

### Production of paper containing 20% of Coral Flour.

100 kg of flour obtained by grinding sea coral with a hammer mill and sifting on the screen (80 microns interspace between wire and wire) were added to the paper pulp as described in the previous examples.

The Coral Flour had an average diameter of about 11 microns.

The flour was added to a water dispersion of cellulose fibres and then added with the same ancillaries as per the previous examples.

The operative conditions of the paper machine remained those used for producing the paper in the reference example.

This paper was little characterized and, in fact, is the most similar to the reference obtained with ground calcium carbonate.

**TABLE 1**

| Constitution in kg of the paper pulp used | | | | | |
|---|---|---|---|---|---|
| Description | Ref. Ex. | Ex. 1 | Ex. 2 | Ex. 3 | Ex. 4 |
| Bleached spruce cellulose | 98 | 100 | 97 | 98 | 99 |
| Bleached eucalyptus cellulose | 306 | 306 | 305 | 309 | 305 |
| Flour of | (A) | (B) | (C) | (D) | (E) |
| Quantity | 100 | 100 | 99 | 97 | 100 |
| Sizing agent 7% dry | 40 | 40 | 40 | 40 | 40 |
| Retentive polyacrylamide | 0,2 | 0,2 | 0,2 | 0,2 | 0,2 |
| Cationic starch in mass | 5 | 5 | 5 | 5 | 5 |
| Anionic starch in surface | 20 | 23 | 18 | 20 | 20 |
| Total kg. | 569,2 | 574,2 | 564,2 | 569,2 | 569,2 |
| Good paper obtained kg. | 380 | 420 | 440 | 410 | 460 |
| (A) = Calcium Carbonate (B) = Volcano (C) = Mother-of-pearl (D) = Shells (E) = Coral | | | | | |

**TABLE 2**

| Characteristics of the paper obtained | | | | | |
|---|---|---|---|---|---|
| Description | Ref. Ex. | Ex. 1 | Ex. 2 | Ex. 3 | Ex. 4 |
| Substance g/m² | 81 | 79 | 80 | 82 | 80 |
| Thickness micron | 93 | 100 | 94 | 98 | 88 |
| Bulk kg/dmc | 1,15 | 1,27 | 1,17 | 1,20 | 1,10 |
| Burst resistance kg/cm² | 2,2 | 1,9 | 2,0 | 2,2 | 2,4 |
| Photov. White % | 86 | 71 | 79 | 81 | 83 |
| Opacity % | 76 | 89 | 82 | 82 | 78 |
| Ash Content % | 17 | 18 | 17 | 16 | 17 |
| Writability | Good | Excellent | Good | Good | Good |
| Printability | Good | Good | Fair | Good | Good |

## Claims

1. Process for producing inorganic flours from the surplus of products of a natural origin characterized by the fact that said surplus is ground to reduce its particle size to 2-2000 microns and sifted with screens of from 50 to 1000 microns to remove the large fragments.

2. Process for producing inorganic flours as claimed at 1. and characterized by the fact that surplus coming from volcanic ash and lava is ground to reduce its size to 2-500 microns and then sifted with screens having an interspace between wire and wire of from 50 to 300 microns to remove the large fragments.

3. Process for producing inorganic flours as claimed at 1. and characterized by the fact that mother-of-pearl, seashells and coral are ground to reduce the size to 5-2000 microns and then sifted with screens having an interspace between wire and wire of from 100 to 1000 microns to remove the large fragments.

4. Process for producing inorganic flours as claimed at 1. and characterized by the fact that said flours are sifted already dispersed in water at a dry concentration of from 15% to 60% in weight.

5. Process for producing inorganic flours as claimed at 1. and characterized by the fact that said flours have an average grain size of from 40 to 1000 microns.

6. Process for producing inorganic flours as claimed at 1. and characterized by the fact that said flours have an average grain size of from 2 to 50 microns.

7. Process for producing inorganic flours as claimed at 1. and 6. and characterized by the fact that said flours are used to partly or totally replace inorganic fillers, such as calcium carbonate, kaolin and talc.

8. Process for producing inorganic flours as claimed at 1. and 5. and characterized by the fact that said flours are used to partly or totally replace the mineral fillers traditionally added to the surface or in the size-press or in coating processes.

9. Process for producing inorganic flours as claimed at 1. and 7. and characterized by the fact that said flours are used as additives for paper, board, rubbers, plastic materials, water paints and varnishes.

10. Papers and boards characterized by the fact that they have a content of from 1% to 50% in weight of inorganic flours obtained by means of treating natural inorganic waste products.

11. Papers and boards characterized by the fact that they have a content of from 0.5% to 5% in weight of inorganic flours obtained as claimed in 3.

12. Rubbers, plastic materials, water paints and varnishes characterized by the fact they have a content of from 1% to 50% in weight of inorganic flours obtained by means of treating natural inorganic waste products.
